# EUROPEAN PATENT APPLICATION

(11) **EP 1 901 556 A1**
(43) Date of publication of application: **19.03.2008**
(21) Application number: 06756397.3
(22) Date of filing: 19.05.2006
(51) Int. Cl.: H04N 7/15

(54) **REMOTE DISTRIBUTION SYSTEM AND REMOTE DISTRIBUTION METHOD**

(30) Priority: 20.05.2005 JP 2005148640
(71) Applicant: Earnet Co. Ltd., Machida-shi Tokyo 194-0013 (JP)
(72) Inventor: SYOU, Wai c/o EARNET CO.LTD, Tokyo 194-0013 (JP); NAKAGISHI, Tetsuya c/o EARNET CO., LTD., Tokyo 194-0013 (JP); HAYASHI, Keiji c/o EARNET CO., LTD., Tokyo 194-0013 (JP)
(74) Representative: HOFFMANN EITLE
(86) International application number: PCT/JP2006/310041
(87) International publication number: WO 2006/123780

(57) **Abstract**

A remote delivery system for delivering a lecture content given by an instructor to a remote location preliminarily, converts an instructor's document to an animation file, delivers to a student's terminal, automatically delivers, from the starting of a lecture, image sound data including an image and sound of the instructor, the number of the instructor's document selected by the instructor, location data of a pointer on a screen, character or figure data drawn on a whiteboard by the instructor and animation information included in the instructor's document, and displays on the student's terminal in real time by comparing an instructor document number and an animation information number preliminarily written in the animation file with delivered numbers.

## Description

### [TECHNICAL FIELD]

The present invention relates to a remote delivery system and remote delivery method which provides a real-time or on- demand lecture to a student at a remote location through a communication network.

### [BACKGROUND ART]

The conventional remote delivery system and remote delivery method is disclosed in Japanese Patent Laid-Open Publication No.2000-250392. The remote delivery system and remote delivery method obtains a content of an instructor's lecture as image data and sound data, which is given in school, in an office or in a lecture meeting, and provides these data to a student at a remote location through a network.

In the remote delivery system, the instructor needs to give a lecture toward a terminal device (PC) for delivery. The remote delivery system also has a restriction that a dedicated application for delivery should be operated. There is therefore a problem that the operations done by the instructor side is a heavy burden.

Further, when the instructor draws a character or figure on a whiteboard, the remote delivery system converts the character or figure on the whiteboard to pictures by using another application and delivers to the student at the remote location. There is therefore a program that the number of delivery devices increases and the cost goes up. Also, when an on-demand delivery is performed at the student's request after a real-time delivery, the remote delivery system delivers images of the whiteboard with synchronizing to pictures delivered in a streaming format. Thus, if the student replays from the middle of the pictures, the remote delivery system delivers only the images of the whiteboard which are synchronized to pictures delivered in the replay, and does not deliver images of the whiteboard before the replay point. In the on-demand delivery, the student therefore cannot understand immediately that based on what context (course of the lecture) the images of the whiteboard in the replay are displayed, so that the lecture content becomes unclear.

### [DISCLOSURE OF THE INVENTION]

The present invention is provided in view of the above problems, and has an object to provide a remote delivery system and remote delivery method which reduces the burden of delivery operations done by an instructor's side in delivering a lecture content to a student and enables the student to attend a lecture with a feeling of being there which is closer to a real lecture when the student attends to the delivered lecture.

Also, the present invention has an object to provide a remote delivery system and remote delivery method which enables even a student with a narrow band to attend a remote lecture.

In order to solve the above problems, the present invention provides a remote delivery system for delivering a lecture content given by an instructor to a remote location, comprising: image data obtaining means that obtains image data including an appearance of the instructor; sound data obtaining means that obtains sound data including a voice of the instructor; projecting means that projects a lecture document of the instructor on a predetermined screen; pointer displaying means that displays a pointer movably on the lecture document projected on the screen; location coordinate calculating means that calculates a coordinate of a location on the screen specified by the pointer displaying means as pointer display data; whiteboard information obtaining means that obtains a character or a figure drawn on the whiteboard by the instructor as coordinate data and/or color information in time series; animation information signal obtaining means that obtains an animation number corresponding to animation information included in the lecture document; preliminary delivery data creating means that creates preliminary delivery data by converting the lecture document, which includes the animation information, to animation data; delivering means that delivers the preliminary delivery data to a terminal of a student on a remote location; preliminary delivery data storing means that is provided at a student's side, and obtains and stores the preliminary delivery data; real time delivering means that delivers the image data, the sound data, the pointer display data, the coordinate data and/or the color information of the whiteboard, and the animation number, in real time: and real time reproducing means that is provided at the student's side, and obtains and reproduces the image data, the sound data, the pointer display data, the coordinate data and/or the color information of the whiteboard and the animation number in response to a progress of the lecture document of the instructor with synchronizing to the preliminary delivery data which is preliminarily obtained.

According to the present invention, because complicated terminal setting and delivery operations for delivering lecture images are not necessary, it is possible to reduce the burden of instructor's terminal operations. Also, because the character or figure drawn on the whiteboard is delivered in real time and clearly to the student side, it is possible to provide the lecture to the student with a strong feeling of being there, comparing to the conventional remote delivery system.

Also, according to the present invention, because the instructor's document is preliminarily converted to animation data and transmitted to the student at the remote location, the remote lecture is possible even for a student having a narrow band with a relatively few amount of transmission. This enables to invite students widely without depending on areas or communication environments. Also, the delivery device at a data transmission side can be miniaturized and the cost at the student side and delivery side can be reduced.

According to a preferable embodiment of the present invention, the remote delivery system further comprises storing means that stores the image data, the sound data, the pointer display data, the coordinate data and/or the color information of the whiteboard and the animation number which are reproduced with synchronizing to the progress of the lecture document of the instructor and the preliminary delivery data as a set of data, and accumulates a plurality of sets of data in past, wherein the real time delivering means obtains desired data from the storing means in response to a request from the student and delivers to the student

According to a preferable embodiment of the present invention, the remote delivery system further comprises database creating means that triggers, in real time, a point in which an arbitrary page is selected from the lecture document configured of a plurality of pages, stores the image data, the sound data, the pointer display data, the coordinate data and/or color information of the whiteboard and the animation number by synchronizing in time series, performs the storing for each document, and creates a database.

According to a preferable embodiment of the present invention, the remote delivery system further comprises editing means that displays a plurality of documents registered in the database and creates a new lecture list by rearranging, in time series, a document which is arbitrarily selected by an instruction from outside.

In order to solve the above problems, the present invention provides a remote delivery method for delivering a lecture content given by an instructor to a remote location, comprising: an image data obtaining step of obtaining image data including an appearance of the instructor; a sound data obtaining step of obtaining sound data including a voice of the instructor; a projecting step of projecting a lecture document of the instructor on a predetermined screen; a pointer displaying step of displaying a pointer movably on the document projected on the screen; a location coordinate calculating step of calculating a coordinate of a location on the screen specified by the pointer displaying means as pointer display data; a whiteboard information obtaining step of obtaining a character or a figure drawn on the whiteboard by the instructor as coordinate data and/or color information in time series; an animation information signal obtaining step of obtaining an animation number corresponding to animation information included in the lecture document; a preliminary delivery data creating step of creating preliminary delivery data by converting the lecture document, which includes the animation information, to animation data; a delivering step of delivering the preliminary delivery data to a terminal of a student on a remote location; a preliminary delivery data storing step of being provided at the student' s side, and obtaining and storing the preliminary delivery data; a real time delivering step of delivering the image data, the sound data, the pointer display data, the coordinate data and/or the color information of the whiteboard, and the animation number, in real time: and a real time reproducing step of being provided at a student's side, and obtaining and reproducing the image data, the sound data, the pointer display data, the coordinate data and/or the color information of the whiteboard and the animation number in response to a progress of the lecture document of the instructor with synchronizing to the preliminary delivery data which is preliminarily obtained.

According to the present invention, because complicated terminal setting and delivery operations for delivering lecture images are not necessary, it is possible to reduce the burden of instructor's terminal operations. Also, because the character or figure drawn on the whiteboard is delivered in real-time and clearly to the student side, it is possible to provide the lecture to the student with a strong feeling of being there, comparing to the conventional remote delivery method.

According to a preferable embodiment of the present invention, the remote delivery method further comprises a storing step of storing the image data, sound data, pointer display data, coordinate data and/or color information of the whiteboard and animation number which are reproduced with synchronizing to the progress of the lecture document of the instructor and the preliminary delivery data as a set of data, and accumulating a plurality of sets of data in past, wherein the real time delivering step has a step of obtaining desired data from the storage means in response to a request from the student and delivering to the student.

According to a preferable embodiment of the present invention, the remote delivery method further comprises a database creating step of triggering, in real time, a point in which an arbitrary page is selected from the lecture document which is configured of a plurality of pages, storing the image data, the sound data, the pointer display data, the coordinate data and/or the color information of the whiteboard and the animation number by synchronizing in time series, performing the storing for each document, and creating a database.

According to a preferable embodiment of the present invention, the remote delivery method further comprises an editing step of displaying a plurality of documents registered in the database and creating a new lecture list by rearranging, in time series, a document which is arbitrarily selected by an instruction from outside.

### [BRIEF DESCRIPTION OF THE DRAWINGS]

FIG.1 is a schematic view of a remote delivery system according to an embodiment of the present invention.
FIG.2 is a schematic block view showing an example of a hardware configuration of a host terminal according to the embodiment of the present invention.
FIG.3 is a schematic block view showing an example of a hardware configuration of an encoder terminal according to the embodiment of the present invention.
FIG.4 is a schematic block view showing an example of a hardware configuration of a contents server according to the embodiment of the present invention.
FIG.5 is the first half of a sequence for explaining operations of the remote delivery system according to the embodiment of the present invention.
FIG. 6 is the second half of the sequence for explaining operations of the remote delivery system according to the embodiment of the present invention.
FIG.7 is a view showing an example of a browser display screen shown on a client terminal according to the embodiment of the present invention.
FIG.8 is a view showing a database configuration created by database creating means provided to the contents server according to the embodiment of the present invention.
FIG. 9 is a flowchart for explaining an editing function according to the embodiment of the present invention.
FIG. 10 is a view showing an example of a browser display screen in order to realize the editing function according to the embodiment of the present invention.

### [BEST MODE FOR CARRYING OUT THE INVENTION]

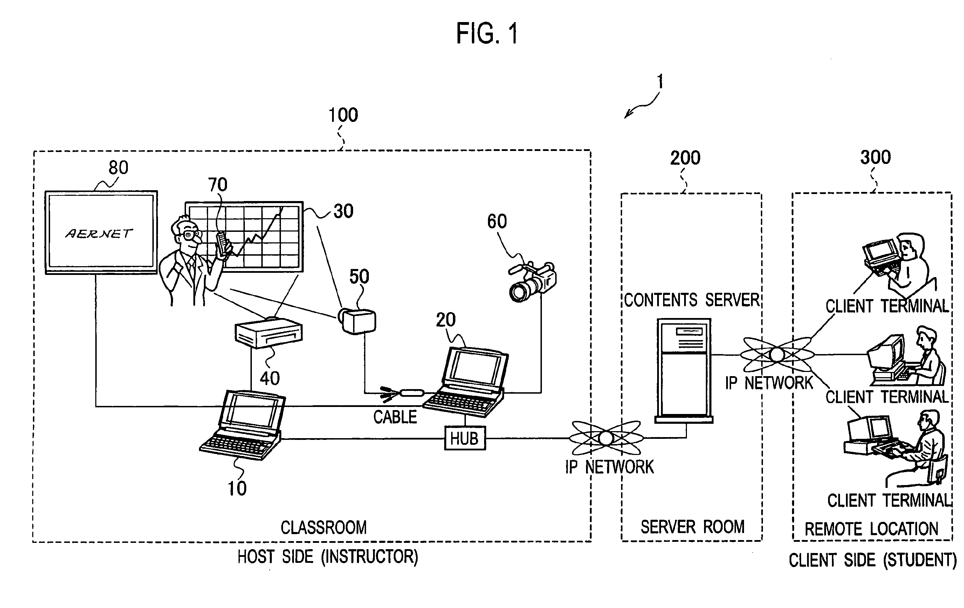

With reference to FIGS.1 to 10, there will be described an embodiment of the present invention below.

### (Remote delivery system)

FIG.1 is a system schematic view of a remote delivery system 1 according to an embodiment of the present invention. The remote delivery system 1 is a system which enables to delivery a content of a lecture given by an instructor in real time or on demand to a student on a remote location, where a host side 100, a server room 200 and a client side 300 are connected to one another through an internet protocol.

The host side 100 is a lecture room, a meeting room, or the like, in which a lecturer (or presenter) actually gives a lecture (or presentation). The host side 100 is configured with at least a host terminal 10, an encoder terminal 20, a screen 30, a projector 40, a pointer location measuring camera 50, an instructor recording camera 60, a laser pointer 70 held by the instructor in hand, and a whiteboard 80.

The host terminal 10 and the projector 40 are interconnected by an image cable. The host terminal 10 and the encoder terminal 20 are interconnected by cables through a hub. Also, to the encoder terminal 20 are connected the pointer location measuring camera 50 and the instructor recording camera 60 by image and sound cables. To the encoder terminal 20 is further connected the whiteboard 80.

The pointer location measuring camera 50 captures a pointer indicated on a screen by the instructor and measures the location of the pointer. That is, there is provided coordinate calculation processing means which coordinate-changes a point indicated by the pointer to an X-Y coordinate in real time so as to output. The laser pointer 70 is equipped with an infrared laser as a light source. The pointer location measuring camera 50 is provided with a filter which transmits only the infrared laser. This enables to selectively capture only the infrared light of the laser pointer indicated on the screen when the pointer location measuring camera 50 captures the screen, and accurately measure only the location of the pointer without the influence of an ambient light around the screen.

The instructor recording camera 60 is a camera to capture the instructor, the screen 30, and the whiteboard 80. It is possible to capture the instructor and the screen 30, or only the whiteboard 80 as necessary. There is given an instruction of switching the capture areas from the encoder terminal 20 or the like.

The whiteboard 80 has a function to save a character or figure written by the instructor on the whiteboard as electric data and output to the encoder terminal 20. The whiteboard 80 has a structure under the board surface in which more than a dozen elongated loop-shaped sensor coils are arranged respectively in an X-axis direction (lateral direction on the board surface) and a Y-axis direction (longitudinal direction on the board surface) in a lattice pattern in a layer stack. There is one wound coil implanted in a pen used by the instructor and connected to a condenser to form an LC resonance circuit. When an alternating current is applied to the sensor coil group on the board surface in a given time so as to produce a magnetic field and then the pen is made to contact the board surface, an induced current flows through the pen, thereby being stored in the condenser. Then, by stopping the current flowing through the sensor coils, there flows a current, which is powered by the electricity saved in the condenser on the pen side, through the coil on the pen side, thereby producing a magnetic filed. With the influence of the magnetic field, an induced current flows through a sensor coil on the board surface. By measuring the location of the sensor coil on which the current flows with this state, it is possible to know the location (coordinate) of the pen. By repeating the measuring more than a dozen times for one second, a computer can recognize a character or figure drawn on the board surface. It is noted that other than the above described whiteboard, there is a way to provide a pressure sensor on the pen side and measure the coordinate on the board by the pressure of the pen. In the present embodiment, a whiteboard having any configuration may be applied as long as the computer can obtain character information drawn on the whiteboard.

### (Host terminal)

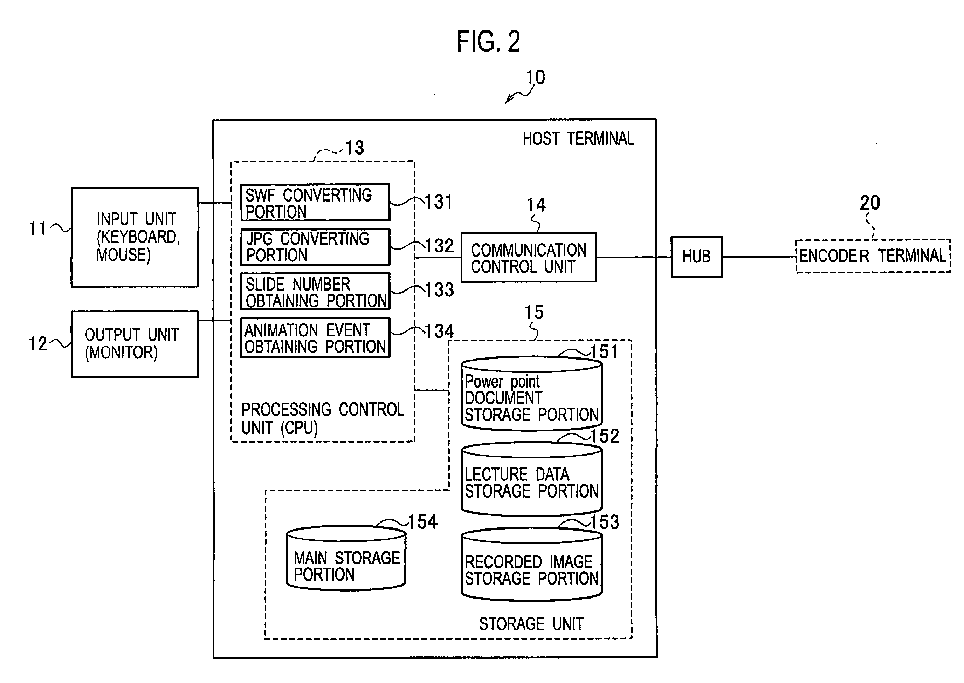

Next, with reference to FIG.2, there will be described a specific configuration of the host terminal 10. The host terminal 10 comprises at least an input unit (keyboard, mouse) 11, an output unit (monitor, projector) 12, a processing control unit (CPU) 13, a communication control unit 14, a storage unit 15, and the like.

The processing control unit 13 is configured with a SWF converting portion 131, a JPG converting portion 132, a slide number obtaining portion 133, an animation event obtaining portion 134, and the like. The storage unit 15 is configured with a Power Point (registered trademark) document storage portion 151, a lecture information storage portion 152, a recorded image storage portion 153, a main storage 154, and the like.

The SWF converting portion 131 is a functional portion to convert a Power Point document prepared by the instructor to Flash data. When the document of the instructor is made up of a plurality of pages or has a slide with a built-in animation, the slide number (number) or animation number (number) of this document is also converted and written in the Flash data.

The JPG converting portion 132 is a functional portion to convert each slide in the document to JPEG data. The converted slides are transmitted to a contents server 200 and then saved in a JPEG data for thumbnail storage portion 2032.

The slide number obtaining portion 133 is a functional portion to obtain a slide number, synchronizing to every movement of switching to another slide of the Power Point by the instructor, and transmit to the encoder terminal 20, the contents server 200, and a client terminal 300. The slide number is subsequently to be linked with image data and the like and saved in a database.

The animation event obtaining portion 134 is a functional portion to obtain an animation number, synchronizing to a movement of starting an animation built in a slide, and transmit the animation number to the encoder terminal 20, the contents server 200, and the client terminal 300. The animation number is also subsequently to be linked with the image data and saved in the database.

The Power Point document storage portion 151 is a storage portion to save a Power Point document prepared by the instructor when the Power Point document is installed in the host terminal 10.

The lecture information storage portion 152 is a storage portion to save lecture information including a lecture name, an instructor's name, a lecture date and time, and a group name of the lecture in a case a plurality of lectures exist.

The recorded image storage portion 153 is a storage portion to back up the image data, the sound data, the measured location of the laser pointer, and the character, figure or the like drawn on the whiteboard, in case the encoder terminal 20 should fail to obtain these data.

The main storage 154 is a functional portion to temporarily store a program describing a procedure and data to be processed and pass a machine instruction or data in response to a request from the CPU.

### (Encoder terminal)

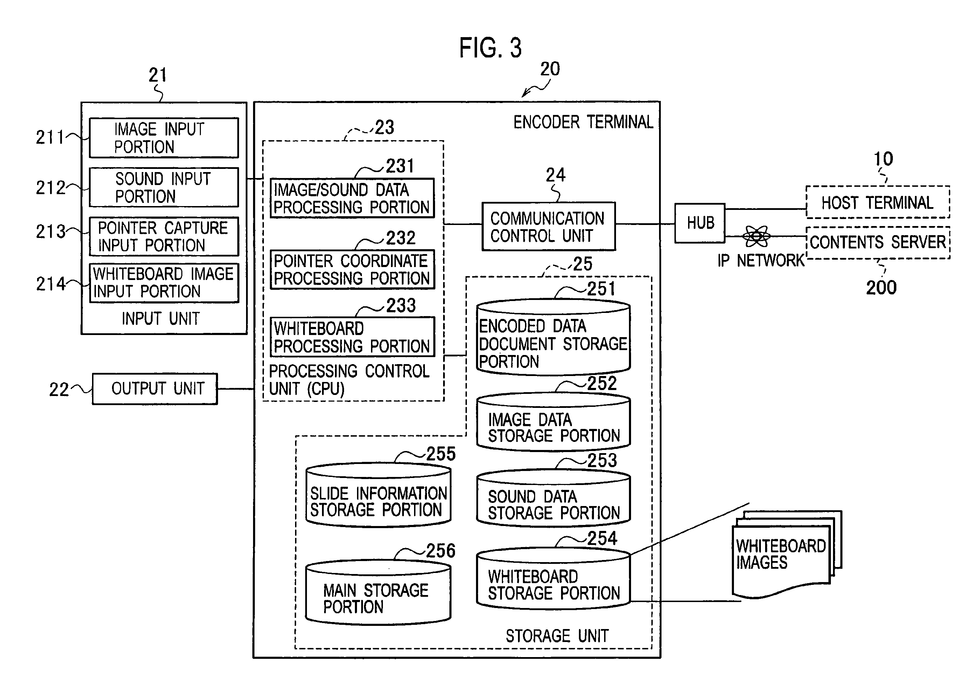

Next, with reference to FIG.3, there will be described a specific configuration of the encoder terminal 20. The encoder terminal 20 comprises an input unit 21, an output unit (monitor) 22, a processing control unit (CPU) 23, a communication control unit 24, a storage unit 25, and the like.

The input unit 21 is configured with an image input portion 211, a sound input portion 212, a pointer capture input portion 213, a whiteboard image input portion 214, and the like.

The processing control unit 23 is configured with an image/sound data processing portion 231, a pointer coordinate processing portion 232, a whiteboard processing portion 233, and the like. Also, the storage unit 25 is configured with an encoded data document storage portion 251, an image data storage portion 252, a sound data storage portion 253, a whiteboard image storage portion 254, a slide information storage portion 255, a main storage portion 256, and the like.

The image input portion 211 is an input portion to obtain images captured by the instructor recording camera 60. The sound input portion 212 is an input portion to obtain sounds obtained through a microphone provided to the instructor recording camera 60. The pointer capture input portion 213 is an input portion to obtain images captured by the pointer location measuring camera. The whiteboard image input portion 214 is an input portion to obtain coordinate data and color information of a sensor, since the sensor, which is located at a place on the board where a character or figure is drawn, responds as described above.

The image/sound data processing portion 231 is a processing portion to store the image data and the sound data obtained through the image input portion 211 and the sound input portion 212 in the image data storage portion 252 and the sound data storage portion 253 respectively, and transmit the data to the contents server 200. The data is also transmitted to the host terminal 10 and saved also in the recorded image storage portion 153 of the host terminal 10.

The pointer coordinate processing portion 232 is a functional portion to image-process the image of the pointer obtained through the pointer capture input portion 213 and calculate the location which the pointer indicates. The calculated location information is transmitted to the contents server 200. Then, the contents server 200 displays the pointer on a slide screen of a browser shown on a monitor of the client terminal 300.

The whiteboard processing portion 233 is a processing portion to obtain the coordinate data and the color information of the sensor obtained through the whiteboard image input portion 214 at a regular interval (for example more than a dozen times for one second) and create a file.

The encoded data document storage portion 251 is a storage portion to save the Power Point document converted to Flash data and JPEG data converted for thumbnail on the host terminal 10. The image data storage portion 252 and the sound data storage portion 253 are storage portions to save the image data and the sound data obtained through the sound input portion 212.

The whiteboard image storage portion 254 is a storage portion to save the coordinate data of the character, figure, or the like and the color information as a file, which are processed by the whiteboard processing portion 233.

The slide information storage portion 255 is a storage portion to save a file in which a slide number, an animation number, and a slide number for a thumbnail and time are described.

### (Contents server)

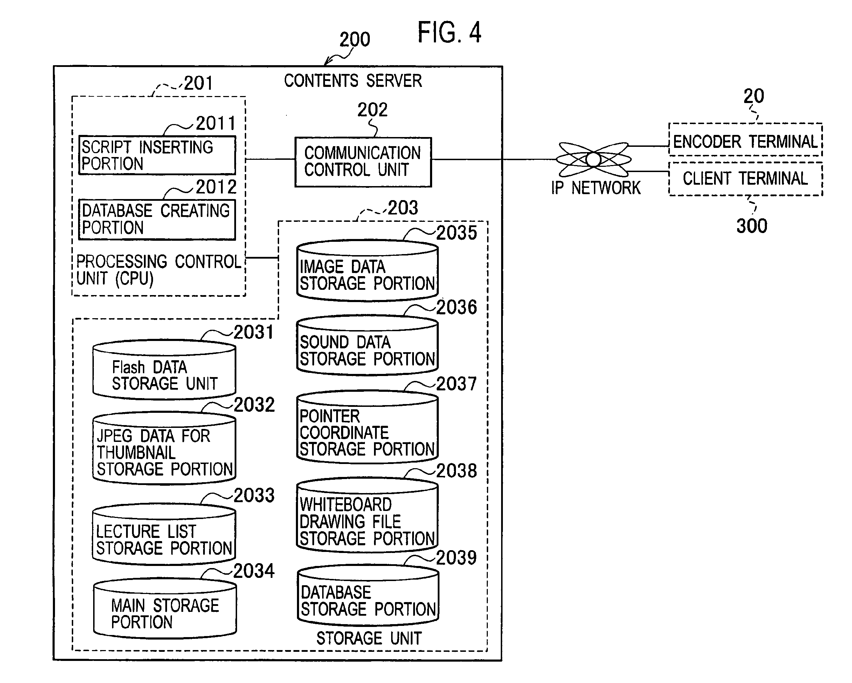

Next, with reference to FIG.4, there will be described a specific configuration of the contents server 200. The contents server 200 comprises a processing control unit (CPU) 201, a communication control unit 202, a storage unit 203, and the like.

The processing control unit 201 is configured with a script insertion portion 2011, a database creating portion 2012, and the like. The storage unit 203 is configured with a Flash data storage portion 2031, the JPEG data for thumbnail storage portion 2032, a lecture list storage portion 2033, a main storage portion 2034, an image data storage portion 2035, a sound data storage portion 2036, a pointer coordinate storage portion 2037, a whiteboard drawing file storage portion 2038, a database storage portion 2039, and the like.

The script insertion portion 2011 is a functional portion to give a script signal for recognizing a starting point when the image data, sound data, pointer data, and coordinate data and color information of the whiteboard are linked and saved for each slide. When the instructor selects a slide for editing the contents of a lecture after the lecture is ended, there are read-in image data, sound data and the like which are linked to the script signal given to the slide.

The database creating portion 2012 is a functional portion to save the above various data in a database.

The Flash data storage portion 2031 and the JPEG data for thumbnail storage portion 2032 are storage portions to save the Flash data and the JPEG data received from the host terminal 10.

The lecture list storage portion 2033 is a storage portion to save a lecture list configured with a lecture name, an instructor's name, a storage time, and contents information stored in the contents server.

The image data storage portion 2035, the sound data storage portion 2036, the pointer coordinate storage portion 2037, and the whiteboard drawing file storage portion 2038 are storage portions to save the same data obtained and saved by the encoder terminal 20.

The database storage portion 2039 is a storage portion to save the database created by the database creating portion 2012.

It is noted that there is preliminarily installed a software program to realize the predetermined functions, such as Power Point and the like, in each main storage of the host terminal 10, the encoder terminal 20, the contents server 200, and the client terminal 300.

### (Method of lecture delivering)

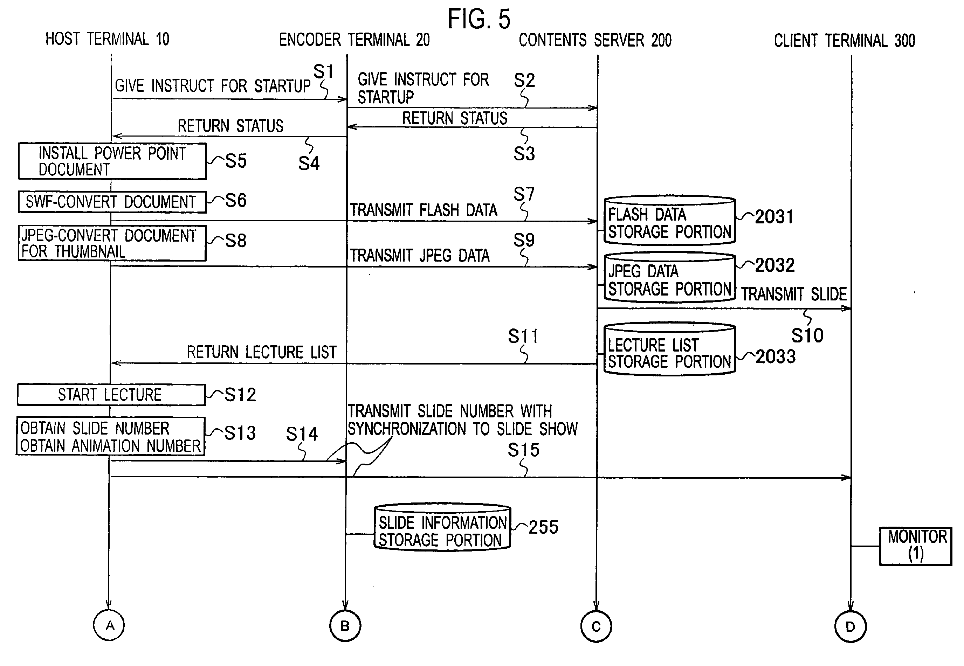

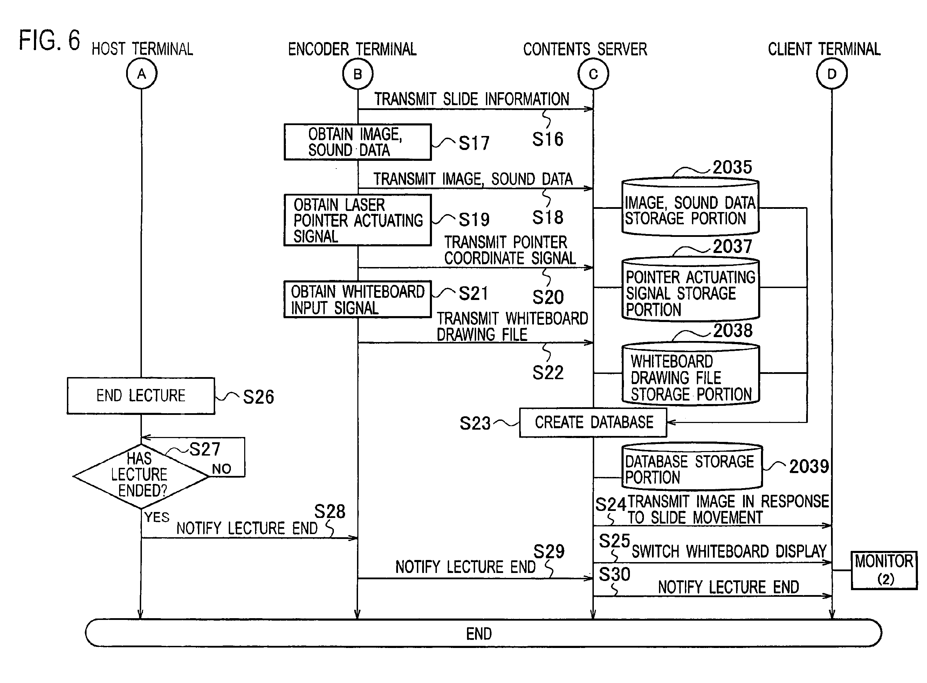

Next, with reference to FIGS.5 and 6, there will be described the operation of the remote delivery system 1 of the present invention. At first the various devices are connected as shown in FIG.1 and each power is turned on.

In step S1, the host terminal 10 sends a startup signal to the encoder terminal 20 to check the connection and instruct the startup of the encoder terminal 20.

In step S2, the encoder terminal 20 sends a startup signal to the contents server 200 to check the connection and instruct the startup.

In step S3, the contents server 200 returns the current working status to the encoder terminal 20. When there is returned that the connection check is not returned within a given time or that the startup is in a preparation status, the encoder terminal 20 outputs the startup instruction signal again after a given time and repeats transmitting the startup instruction signal until the startup of the contents server 200 is confirmed.

In step S4, after confirming the connection check and startup status of the contents server 200, the encoder terminal 20 performs a status return to the host terminal 10 with own (encoder terminal 20) connection check and startup status. This displays "Delivery preparation completed" on the monitor of the host terminal 10, which shows that the connection between the encoder terminal 20 and the contents server 200 is established.

In step S5, the instructor installs on the host terminal 10 the document prepared by Power Point. The installed document is saved in the Power Point document storage portion 151. Also a message "Start lecture?" is shown on the monitor of the host terminal 10.

In step S6, if "Yes" is selected for the message "Start lecture?" shown on the monitor in step S5, the SWF converting portion 131 of the host terminal 10 collectively converts all of the lecture document to Flash data (**.swf). At this time, the slide number and the animation number are written in the Flash data simultaneously with the conversion.

In step S7, the communication control portion 14 of the host terminal 10 transmits the Flash data created in step S6 to the contents server 200. The Flash data is saved in the Flash data storage portion 2031 of the contents server 200.

In step S8, the JPG converting portion 132 of the host terminal 10 reads-in the Power Point data from the Power Point document storage portion 151 and converts each slide to a JPEG format.

In step S9, the converted JPEG data is transmitted to the contents server 200 through the communication control unit 14 and saved in the JPEG data for thumbnail storage portion 2032.

In step S10, the contents server 200 delivers the JPEG-converted slides to the client terminal 300.

In step S11, the contents server 200 returns to the host terminal 10 the lecture list including the lecture name, instructor's name, and lecture date and time preliminarily stored in the lecture list storage portion 2033.

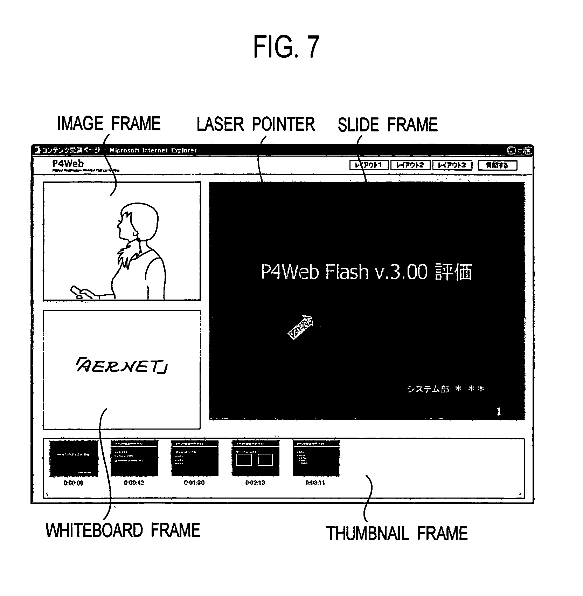

In step S12, a message "Remote delivery started" is shown on the monitor of the host terminal 10. If an "OK" button is pressed, the delivery of the slide, image and sound is started for the client terminal 300. The instructor starts the lecture based on the slide shown on the screen 30 as same as in a usual lecture. At this time, the monitor of the client terminal 300 displays the browser shown in FIG. 7. The display configuration of the browser will be described later.

Although all processes are executed concurrently in steps S13 to S25, there will be described every some steps divided for explaining.

In steps S13 to S15, the slide number obtaining portion 133 of the host terminal 10 obtains the slide number which the instructor currently selects, and at this time, if the slide has a built-in animation, transmits the animation number to the encoder terminal 20 and the client terminal 300. The encoder terminal 20 saves the slide number and the animation number in the slide information storage portion 255.

In step S16, the processing control unit 23 of the encoder terminal 20 reads-in the slide information preliminarily saved in the slide information storage unit 255 and transmits to the contents server 200.

In steps S17 and S18, the image input portion 211 and the sound input portion 212 of the encoder terminal 20 obtain the image and lecture sound captured by the instructor recording camera 60 and transmits them to the contents server 200. The image data and the sound data are saved in the image data storage portion 2035 and the sound data storage portion 2036, respectively.

In steps S19 and S20, the pointer capture input portion 213 of the encoder terminal 20 obtains the image captured by the pointer location measuring camera 50 and outputs to the pointer coordinate processing portion 232. The pointer coordinate processing portion 232 calculates the location of the pointer based on the image and transmits to the contents server 200. The pointer coordinate signal is saved in the pointer coordinate storage portion 2037.

In steps S21 and S22, the whiteboard image input portion 214 of the encoder terminal 20 obtains the location of a whiteboard sensor which corresponds to the character or figure drawn on the whiteboard by the instructor and outputs to the whiteboard processing portion 233. The whiteboard processing portion 233 saves at a given interval the coordinate data and the color information of the sensor in a file and transmits to the contents server 200. The file is saved in the whiteboard drawing file storage portion 2038 as necessary.

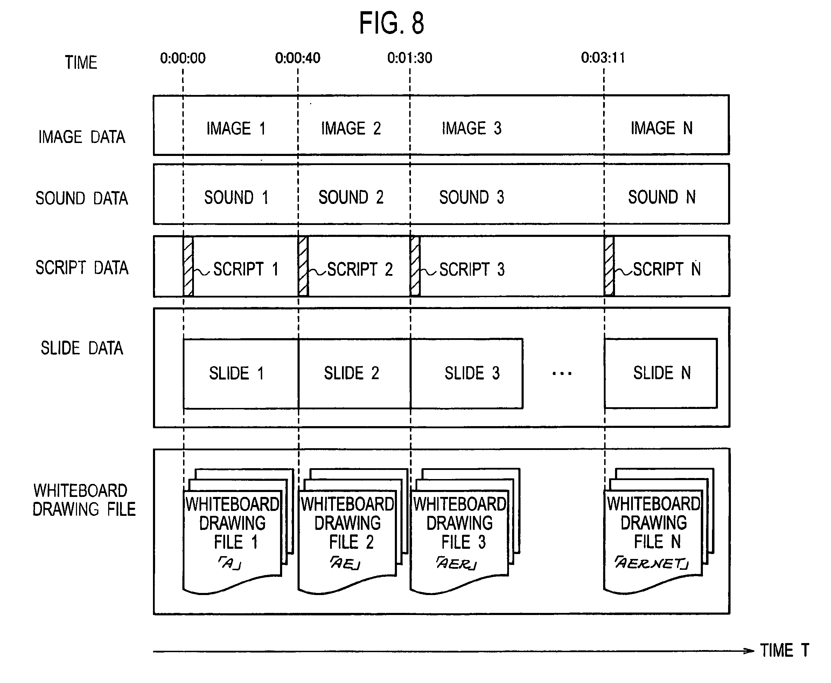

In step S23, the script insertion portion 2011 of the contents server 200 triggers the timing of obtaining the slide number so as to generate a script signal. Then, the database creating portion 2012 obtains the script signal, links the image data, the sound data and the whiteboard drawing file obtained in the above steps to create a file, and saves the file in a database. There will be described later about the file and the database with reference to FIG.8.

In steps S24 and S25, at the same time, as steps S13 to S23, the contents server 200 delivers to the client terminal 300 the image data, sound data, pointer coordinate data and whiteboard drawing file in response to the movement of the slide. This enables the student to attend the lecture in real time.

In step S26, when the instructor finishes the lecture and closes the application of Power Point, a message "End remote delivery?" is shown on the monitor of the host terminal 10 in step S27. If the "OK" button is selected, in step S28, the host terminal 10 sends a lecture end notification to the encoder terminal 20. In step S29, the encoder terminal 20 sends the lecture end notification to the contents server 200. In step S30, the contents server 200 sends the lecture end notification to the client terminal 300 and thereby finishes delivering the lecture.

It is noted that in the above processes the slide number, image data, sound data, pointer coordinate data and whiteboard drawing file are all linked to the script signal and saved as the file. Moreover, files are saved in a database for every lecture and stored in the storage portion. Even though a client cannot attend the lecture in real time, by selecting a desired lecture from a lecture list, the request is transmitted from the client terminal 300 and the desired lecture is delivered from the contents server 200. That is, it is possible to attend the lecture on demand.

Next, with reference to FIG.7, there will be described the display configuration of the browser shown on the monitor of the client terminal 300.

The browser is configured with an image frame, a slide frame, a whiteboard frame, and a thumbnail frame. The image frame is arranged at the upper left and always broadcasts images of the instructor. Under the image frame the whiteboard frame is arranged, and when the character or figure is drawn by the instructor on the whiteboard, the information is digitized and reproduced thereon in real time. When the instructor erases a character or the like, the character is also erased from the frame. On the right side of the image frame and the whiteboard frame, the slide frame is arranged. The slide frame occupies the widest area in the browser. In this frame, a slide which the instructor currently explains about (selects) is shown. At the bottom of these frames, the thumbnail frame which is horizontally long is arranged. In the thumbnail frame, all the slides of the lecture are shown in time-series.

This display configuration enables the student to attend the lecture, while confirming the movements of the instructor through images and moving his/her viewpoint to the slide or whiteboard as necessary. It is possible to attend the lecture in the almost same condition as an actual lecture, since one in the actual lecture checks the slide or whiteboard, while confirming the movements of the instructor.

Also even though there is a slide the student missed, by selecting the missed slide from the thumbnail frame, the selected slide will be shown on the slide frame. This enables to select a slide depending on the degree of student's understanding. (It is noted that image and sound move on further in a real time delivery.) Further, as all slides of the lecture are shown in the thumbnail frame, it is possible to predict the overall course of the lecture.

It is noted that the browser display is not limited to this display configuration. A display configuration in which the image frame and the whiteboard frame are arranged on the right side may be fine. A plurality of display configurations are preliminarily registered and are accordingly selected or switched depending on the preference of the student. There is therefore preliminarily provided a layout button on the upper right of the browser display, which enables the selection.

Next, with reference to FIG. 8, there will be described the file and database configuration created in step S23 in FIG.5.

As described above, the image data, sound data, pointer coordinate data, and whiteboard drawing file are saved in the storage portion as necessary. Then, the data are linked for each slide and saved in a file. That is, the point at which the first slide is selected is determined as a file saving start time, and the image data, sound data, pointer coordinate data, and whiteboard drawing file are saved until a point at which the next slide is selected (file saving end time).

Also, at the file saving start time, the script signal is obtained from the script insertion portion 2011 and given to the file. By repeating the processing, image, sound, and the like are linked for every slide. Then, these files are saved in the database, and later by selecting the script signal or the slide number as necessary it is possible to read-in, per slide, the image, sound, and the like which are linked thereto.

It is noted that since the coordinate data and color information of the whiteboard are obtained and saved more than a dozen times in one second, a plurality of coordinate data and color information of the whiteboard are linked and saved for one slide. Since a file is created for each slide as described above, the number of files will be same as that of slides. Also since lectures may be held plural times, the first time to the n^{th} time, files should be saved for every holding. Then, what number the lecture is, lecture date, and instructor's name are also saved in the database.

By saving in the file as the above, for example when the lecture is delivered on demand and the browser display is shown on the client terminal as shown in FIG.7, if the student wants to listen to the lecture in midstream, selecting a necessary slide from the thumbnail frame delivers image, sound, and pointer information which are linked to the slide. Since characters and figures on the whiteboard are linked and saved in the file, the characters and figures on the whiteboard corresponding to the slide are replayed by immediately superimposing the coordinate data and color information of the whiteboard so as to be displayed as characters and figures. The student can therefore listen to only a part of the lecture as necessary.

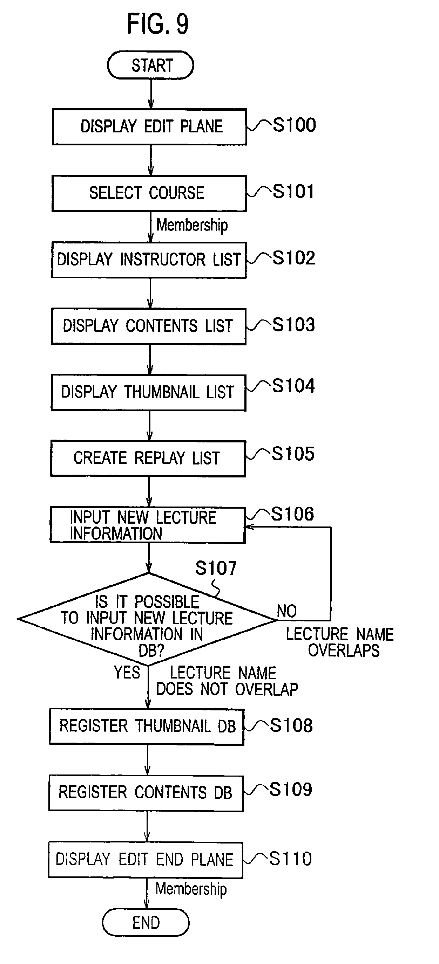

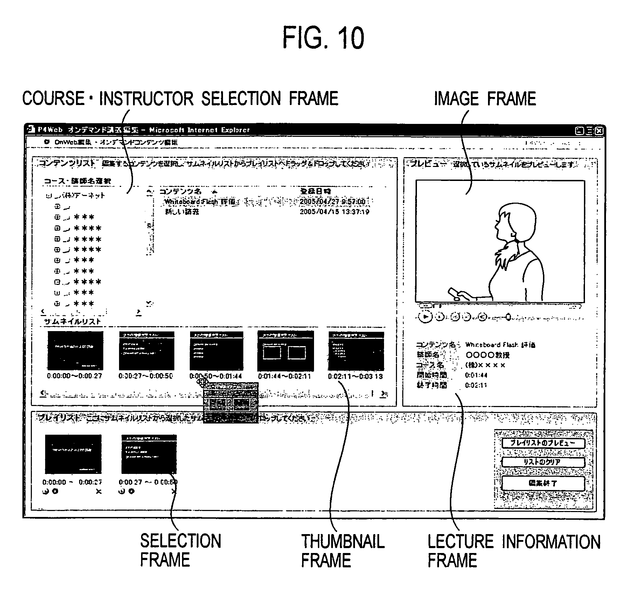

Next, with reference to FIGS.9 and 10, there will be described an editing function for the instructor's document. FIG. 9 is a flowchart showing an editing processing procedure. FIG.10 is a view showing an example of an editing plane. As shown in FIG.10, the editing plane is configured with a course/instructor selecting frame, an image frame, a thumbnail frame, and a selecting frame.

There are shown separate folders by instructor in the course/instructor selecting frame, and when a folder is selected, there are shown a plurality of lectures of the instructor on the right side of this frame. Then when a lecture is selected, slides are shown in the thumbnail frame arranged under the course/instructor selecting frame.

In step S100, the instructor or editor displays the editing plane, as shown in FIG.9.

In step S101, a desired course is selected from the plurality of folders shown in the course/instructor selecting frame.

In step S102, when the course folder is clicked, an instructor list is shown.

In step S103, when an instructor is selected from the instructor list, a plurality of lectures (contents) are shown, and a desired lecture is selected from them.

In step S104, when the lecture is selected, all slides are shown in the thumbnail frame under the course/instructor selecting frame.

In step S105, a necessary slide is moved from the thumbnail frame to the selecting frame by dragging. By doing this for all necessary slides, a new replay list (lecture file) is created. If the instructor or editor wants to confirm the content of the slide, the image will be shown as preview on the image frame by clicking the slide. At the same time, it is possible to confirm the contents' name, instructor's name, course name, start time, and end time since they are shown under the image frame.

In step S106, lecture information about the newly created lecture file is input as new lecture information.

In steps S107 and 108, it is checked whether the lecture name of the new lecture information overlaps or not, and if not overlapped, the information will be registered in a thumbnail database (not shown). Likewise, in step S109, the information will be registered in a contents database.

In step S110, after the above processing is completed, an ending message will be shown on the editing end plane of FIG.10.

By the above processing, the instructor or editor can easily edit on the editing plane the content of a lecture which is already ended. The easy editing as the above is due to that the image, sound, pointer coordinate data, and whiteboard drawing file are preliminarily linked to the slide and managed as one file.

Therefore, according to the remote delivery system of the present invention, when the content of the lecture is delivered to the student, it is possible to reduce the burden of delivery operations done at the instructor side and easily edit the content of the lecture after the lecture. Also, when the student attends the delivered lecture, it is possible to deliver a lecture with a feeling of being there which is closer to the actual lecture.

Also, in the conventional remote delivery system, among image data of the instructor' s lecture, animation information of instructor documents (slide documents projected on the screen), movements of the pointer, and information drawn on the whiteboard, there is a need to deliver the image data of instructor's lecture using a transmission channel at about 300Kbps and the others separately preparing a transmission channel at about 1 to 4 Mbps. There is also a need to use a high-definition color camera and an expensive special equipment to deliver the instructor's document clearly. There is further a need to deliver after a high-definition color processing by pixel is performed on a video signal which is to be delivered, and perform an advanced synchronous adjustment at the receiving side so as to prevent a deblurring of the images.

According to the present invention, however, the instructor's document and the like are preliminarily delivered using a vacant space in a line, and the movements of the pointer and whiteboard information are delivered by being superimposed in a stream delivery (since the information to be superimposed is about a few hundred of bits, little band is needed). Thus, it is possible to aggregate in a single stream deliver channel, and keep the amount of transmission small. Also as there is no need to use the high-definition color camera, cost saving is possible. Further, as it is configured to perform a synchronous processing easily by giving a number between the delivery information, the advanced synchronous adjustment is not needed. Also, as the synchronization of the lecture document and delivered animations is performed on the student's side, it is possible to make the instructor's document to be preliminarily delivered as a high-definition document in full-color and using animations (animation). Thus, the conventional special receiving terminal is not needed, and it is possible to realize a more real and high-quality lecture than ever.

Therefore, from the above reasons, even though a student with a narrow band of about 300kbps to 64Kbps can attend the remote lecture with high quality. Thus it becomes possible to invite students widely without depending on areas or communication environments. Further, it is possible to do a downsizing of the transmission equipment on the data transmitting side, and reduce the cost on the attending and delivering sides.

### [INDUSTRIAL APPLICABILITY]

According to the remote delivery system and remote delivery method of the present invention, since the complicated terminal setting and delivery operations are not necessary, it is possible to reduce the burden of the instructor's terminal operations. Also, as the character or figure drawn on the whiteboard is delivered in real time and clearly to the student side, it is possible to provide a lecture to the student with a strong feeling of being there, comparing to the conventional remote delivery system and remote delivery method.

## Claims

1. A remote delivery system for delivering a lecture content given by an instructor to a remote location, comprising:
image data obtaining means that obtains image data including an appearance of the instructor;
sound data obtaining means that obtains sound data including a voice of the instructor;
projecting means that projects a lecture document of the instructor on a predetermined screen;
pointer displaying means that displays a pointer movably on the lecture document projected on the screen;
location coordinate calculating means that calculates a coordinate of a location on the screen specified by the pointer displaying means as pointer display data;
whiteboard information obtaining means that obtains a character or a figure drawn on the whiteboard by the instructor as coordinate data and/or color information in time series;
animation information signal obtaining means that obtains an animation number corresponding to animation information included in the lecture document;
preliminary delivery data creating means that creates preliminary delivery data by converting the lecture document, which includes the animation information, to animation data;
delivering means that delivers the preliminary delivery data to a terminal of a student on a remote location;
preliminary delivery data storing means that is provided at a student's side, and obtains and stores the preliminary delivery data;
real time delivering means that delivers the image data, the sound data, the pointer display data, the coordinate data and/or the color information of the whiteboard, and the animation number, in real time: and
real time reproducing means that is provided at the student's side, and obtains and reproduces the image data, the sound data, the pointer display data, the coordinate data and/or the color information of the whiteboard and the animation number in response to a progress of the lecture document of the instructor with synchronizing to the preliminary delivery data which is preliminarily obtained.

2. The remote delivery system according to claim 1, further comprising:
storing means that stores the image data, the sound data, the pointer display data, the coordinate data and/or the color information of the whiteboard, the animation number, which are reproduced with synchronizing to the progress of the lecture document of the instructor, and the preliminary delivery data as a set of data, and accumulates a plurality of sets of data in past, wherein
the real time delivering means obtains desired data from the storing means in response to a request from the student and delivers to the student.

3. The remote delivery system according to claim 1, further comprising:
database creating means that triggers, in real time, a point in which an arbitrary page is selected from the lecture document configured of a plurality of pages, stores the image data, the sound data, the pointer display data, the coordinate data and/or color information of the whiteboard and the animation number by synchronizing in time series, performs the storing for each document, and creates a database.

4. The remote delivery system according to claim 1, further comprising:
editing means that displays a plurality of documents registered in the database and creates a new lecture list by rearranging, in time series, a document which is arbitrarily selected by an instruction from outside.

5. A remote delivery method for delivering a lecture content given by an instructor to a remote location, comprising:
an image data obtaining step of obtaining image data including an appearance of the instructor;
a sound data obtaining step of obtaining sound data including a voice of the instructor;
a projecting step of projecting a lecture document of the instructor on a predetermined screen;
a pointer displaying step of displaying a pointer movably on the document projected on the screen;
a location coordinate calculating step of calculating a coordinate of a location on the screen specified by the pointer displaying means as pointer display data;
a whiteboard information obtaining step of obtaining a character or a figure drawn on the whiteboard by the instructor as coordinate data and/or color information in time series;
an animation information signal obtaining step of obtaining an animation number corresponding to animation information included in the lecture document;
a preliminary delivery data creating step of creating preliminary delivery data by converting the lecture document, which includes the animation information, to animation data;
a delivering step of delivering the preliminary delivery data to a terminal of a student on a remote location;
a preliminary delivery data storing step of being provided at the student's side, and obtaining and storing the preliminary delivery data;
a real time delivering step of delivering the image data, the sound data, the pointer display data, the coordinate data and/or the color information of the whiteboard, and the animation number, in real time: and
a real time reproducing step of being provided at a student' s side, and obtaining and reproducing the image data, the sound data, the pointer display data, the coordinate data and/or the color information of the whiteboard and the animation number in response to a progress of the lecture document of the instructor with synchronizing to the preliminary delivery data which is preliminarily obtained.

6. The remote delivery method according to claim 5, further comprising:
a storing step of storing the image data, sound data, pointer display data, coordinate data and/or color information of the whiteboard, animation number, which are reproduced with synchronizing to the progress of the lecture document of the instructor, and the preliminary delivery data as a set of data, and accumulating a plurality of sets of data in past, wherein
the real time delivering step has a step of obtaining desired data from the storage means in response to a request from the student and delivering to the student.

7. The remote delivery method according to claim 5, further comprising:
a database creating step of triggering, in real time, a point in which an arbitrary page is selected from the lecture document which is configured of a plurality of pages, storing the image data, the sound data, the pointer display data, the coordinate data and/or the color information of the whiteboard and the animation number by synchronizing in time series, performing the storing for each document, and creating a database.

8. The remote delivery method according to claim 5, further comprising:
an editing step of displaying a plurality of documents registered in the database and creating a new lecture list by rearranging, in time series, a document which is arbitrarily selected by an instruction from outside.
